# EUROPEAN PATENT APPLICATION

(11) **EP 2 388 694 A2**
(43) Date of publication of application: **23.11.2011**
(21) Application number: 10187449.3
(22) Date of filing: 13.10.2010
(51) Int. Cl.: G06F 9/445

(54) **Techniques for combining veneers, indirect addressing instructions used in ARM program code.**

(30) Priority: 17.05.2010 US 781454
(71) Applicant: SAMSUNG ELECTRONICS CO., LTD., Suwon-si Gyeonggi-do 442-742 (KR)
(72) Inventor: Ingles, Roger Harry, Gyeonggi-do 442-742 (KR)
(74) Representative: Jenkins, Richard Gavin

(57) **Abstract**

Methods and computer program products for generating an update package based on a comparison between a base data image and a new data image, wherein the update package includes a set of instructions used for, in a remote client device, creating the new data image from the base data image, are provided. One method includes determining, by a Binary Differencing Engine (BDE), differences between the base data image and the new data image, determining, by the BDE, whether to use at least one of a branch and call instructions, generating, by the BDE, a veneer when any of the at least one of a branch and call instructions exceeds a corresponding address range, each veneer including an address, associating, by the BDE, addresses of two or more veneers with a common update package instruction, and generating, by the BDE, the update package using one or more update package instructions and associated addresses.

## Description

### BACKGROUND OF THE INVENTION

### 1. Field of the Invention:

Aspects of the present invention relate to techniques for remotely updating software in an electronic device. More particularly, aspects of the present invention relate to techniques for resolving a reunion of veneers that minimizes the size of an update package.

### 2. Description of the Related Art:

As electronic devices advance, software has become an increasingly chief component thereof. Even after a given electronic device enters the market, the software for the electronic device may continue to evolve to address existing or new problems, add or change capabilities, etc. However, when a new software version is developed for an electronic device that is already in the market, there is a need to update the software in the electronic device to the newer version. While the electronic device may be returned to the manufacturer to have its software updated to the newer version, the process is costly, inconvenient, and inefficient to do so. Accordingly, it is desirable for the software in the electronic device to be remotely updated to the new version. However, doing so poses many challenges since the electronic device may have limited communication capabilities and/or limited memory resources.

To address the above challenges, capabilities for remotely updating the software of electronic devices to a new version have been developed that minimize the amount of data that needs to be communicated to the electronic devices. An example of these capabilities includes Firmware Over The Air (FOTA), which relies on the Firmware Update Management Object (FUMO) standard of the Open Mobile Alliance Device Management (OMA-DM) group. These capabilities rely on existing and new software being different versions of the same software and thus having a significant amount of data in common. More specifically, instead of communicating the entirety of the new software version that needs to be installed on an electronic device, only information based on differences between the existing software version and the new software version is communicated to the electronic device. Hereafter, the existing software version is referred to as a base data image, the new software version is referred to as a new data image, and the information based on the difference between the base data image and the new data image is referred to as an update package. Data images are generated by a delta image generation tool, an example of which is the Advanced Reduced Instruction Set Computer (RISC) Machine (ARM) Corporation ARMLINK tool.

The update package is generated by comparing the new data image to the base data image to determine their differences. The update package contains all of the information used to change the base data image into the new data image, and is smaller than the new data image. Once the electronic device receives the update package, the electronic device uses the update package to update its base data image into the new data image.

A tool to generate an update package is referred to as a Binary Differencing Engine (BDE). An example of a BDE is the Samsung^{™} Binary Patch (BP) package operating on a computing device that includes a processor and memory. The effective usage of the Samsung^{™} BP package requires that the successive data images be formatted in a manner that assures a high degree of comparability between two successive data images. In other words, a new data image generated by the ARMLINK tool should be formatted to be compatible with a base data image with respect to the Samsung^{™} BP package. This requirement is satisfied by a procedure referred to as "Segmented Linking." The Segmented Linking procedure is a precoding procedure that attempts to stabilize the successive data images by generating a script file used by the ARMLINK tool when generating the new data image to place unchanged code segments of successive data images in the same location in memory.

An alternative to the Segmented Linking procedure, referred to as the FotaARM tool, has been developed. The FotaARM tool places the unchanged code segments more precisely within a new data image than the Segmented Linking procedure. However, the FotaARM tool is sensitive to the intricacies of the ARMLINK tool, and needs continual maintenance for each new release of the ARM tool-chain suite. The FotaARM tool is closely tied to the ARM corporation software suite, and thus is not easily adaptable to other software suites such as GNU/LD, or IAR V5.

Accordingly, to address the shortcomings of Segmented Linking and problems associated with the FotaARM tool, there is a need for a compare procedure for use by a BDE to generate the update package that is operable with native images from the ARMLINK tool. Such a compare procedure for a BDE should be able to handle the scenario where each new data image contains almost the same code as the base data image, but has different locations for respective code segments.

However, when applying an update package that is generated by a BDE based on native images from the ARMLINK tool, the shuffling of unchanged code segments between a base data image and a new data image results in numerous differences. These differences are caused by the location of "branch" and "call instructions" within the code segments having been changed. However, despite the locations of the "branch" and "call instructions" having been changed, the actual logic performed by most of these functions is unchanged.

The differences caused by the shifting of code segments may be addressed through a computation of target addresses of the branch and call instructions, and their resolution in the code of the electronic device.

One technique to address the problems of a compare procedure for use by a BDE to generate the update package based on native images from the ARMLINK tool, is the creation of a small object referred to as a veneer. A veneer is an autonomous object that is automatically created by the ARMLINK program to help branch and call instructions operate in the electronic device. A veneer may be used to transfer control of a branch instruction from thumb mode to arm mode and help overcome a strict limitation on the address range that branch and call instructions can reach. Examples, for various types of code, of a maximum distance address range that branch and call instructions can reach is provided below in Table 1.

**Table 1**

| Type of code performing branch or call | Maximum distance to target in megabytes |
|---|---|
| ARM32 | +/- 32 Mb |
| Thumb-2 | +- 16 Mb |
| Thumb | +/- 4 Mb |

Data images for electronic devices are becoming increasingly large. For example, in 2005, the data image for the Samsung^{™} SGH-ZX10 Universal Mobile Telecommunications System (UMTS) mobile terminal had 50,000 veneers requiring 400,000 bytes of space in the image. Since these bytes are not American Standard Code for Information Interchange (ASCII) text, they cannot be easily compressed. Thus, any significant change to the data image may induce 400,000 bytes of delta space. The resulting new veneers would also be unique and thus cannot be copied or cloned from anywhere in the old image. Accordingly, the new veneers would require ADD instructions in the update package, thereby increasing the size of the update package.

An example of code for a veneer in an ARM9/ARM11 processor is:
LDR PC, [PC, #-4]
DCD Target Address
where LDR denotes a load register command, PC denotes program counter, and DCD denotes a data define command.

While the limitation on the address range that branch and call instructions can reach is strict, there is a degree of uncertainty regarding whether a veneer is needed or not. Accordingly, in the FotaARM tool, provisional veneers are also created when there is a chance that the veneer may be transformed into a direct branch instruction. An example of the provisional is:
B Target Address
DCD 0xFFFFFFFF

In both of the above examples, the size of the veneer is 8 bytes. However, veneers may alternatively be 12 or 16 bytes.

However, the perfect calculation of the offset to the above Target Address locations does not always occur because the ARMLINK program sometimes chooses to use a veneer when the veneer is not needed. As a result, any correctly calculated relocation becomes useless when the ARMLINK program chooses a veneer to reach a target. Such is the case with the Arm Development Suite (ADS) 1.2 ARMLINK program. Further, the Real View Compiler Tool (RVCT) 2.2 ARMLINK program increasingly uses veneers in this manner. Since numerous veneer failures occurred in ADS, ARM introduced a 128 kilo-byte slush fund in RVCT. Thus, any target whose offset fell within the 4 Mb - 128Kb range, always received a veneer.

The FotaARM tool also creates provisional veneers to help reach a target address. The veneers created in a base data image of a phone do not need to bear any relation to the veneers created in the new data image. The first set of anonymous veneers get thrown out, and are replaced by a different set of autonomous veneers in the new data image.

One important factor in the application of an update package to a base image, is the absolute guarantee that the applied update package will perfectly create the new data image. To be considered correct, this perfect new data image has to end up with a perfect checksum. Although an update package that creates an image whose branches skip past the veneers will probably create a perfectly functional new data image, the final checksum will need to be perfect to permit any other future update package to be applied.

Therefore, a need exists for techniques for the reunion of veneers that minimizes the size of an update package.

### SUMMARY OF THE INVENTION

An aspect of the present invention is to address at least the above-mentioned problems and/or disadvantages and to provide at least the advantages described below. Accordingly, an aspect of the present invention is to provide techniques for a reunion of veneers that minimizes the size of an update package.

In accordance with an aspect of the present invention, a method for generating an update package based on a comparison between a base data image and a new data image, wherein the update package includes a set of instructions used for, in a remote client device, creating the new data image from the base data image, is provided. The method includes determining, by a Binary Differencing Engine (BDE), differences between the base data image and the new data image, determining, by the BDE, whether to use at least one of a branch and call instructions, generating, by the BDE, a veneer when any of the at least one of a branch and call instructions exceeds a corresponding address range, each veneer including an address, associating, by the BDE, addresses of two or more veneers with a common update package instruction, and generating, by the BDE, the update package using one or more update package instructions and associated addresses.

In accordance with another aspect of the present invention, a method for generating an update package based on a comparison between a base data image and a new data image, wherein the update package includes a set of instructions used for, in a remote client device, creating the new data image from the base data image, is provided. The method includes generating, by a BDE, a provisional update package, applying, by the BDE, the provisional update package to the base data image to generate a trial new data image, comparing, by the BDE, the trial new data image to the new data image, and generating, by the BDE, the update package by modifying the provisional update package based on a result of the comparison between the trial new data image to the new data image.

In accordance with yet another aspect of the present invention a computer program product comprising a computer usable medium having control logic stored therein for causing a computer to generating an update package based on a comparison between a base data image and a new data image, wherein the update package includes a set of instructions used for, in a remote client device, creating the new data image from the base data image, is provided. The control logic includes a first computer readable program code means for causing the computer to determine differences between the base data image and the new data image, a second computer readable program code means for causing the computer to determine whether to use at least one of a branch and call instructions, a third computer readable program code means for causing the computer to generate a veneer when any of the at least one of a branch and call instructions exceeds a corresponding address range, each veneer including an address, a fourth computer readable program code means for causing the computer to associate addresses of two or more veneers with a common update package instruction, and a fifth computer readable program code means for causing the computer to generate the update package using one or more update package instructions and associated addresses.

In accordance with still another aspect of the present invention a computer program product comprising a computer usable medium having control logic stored therein for causing a computer to generating an update package based on a comparison between a base data image and a new data image, wherein the update package includes a set of instructions used for, in a remote client device, creating the new data image from the base data image, is provided. The control logic includes a first computer readable program code means for causing the computer to generate a provisional update package, a second computer readable program code means for causing the computer to apply the provisional update package to the base data image to generate a trial new data image, a third computer readable program code means for causing the computer to compare the trial new data image to the new data image, and a fourth computer readable program code means for causing the computer to generate the update package by modifying the provisional update package based on a result of the comparison between the trial new data image to the new data image.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates a software update system according to an exemplary embodiment of the present invention;

FIG. 2 is a flowchart for generating an update package using an LDR_VENEER update instruction according to an exemplary embodiment of the present invention;

FIG. 3 is a flowchart for generating an update package using a second pass according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein may be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

It should be understood that the following description might refer to terms utilized in various standards merely for simplicity of explanation. For example, the following description may refer to terms utilized in one of the standards established by the Open Mobile Alliance (OMA). However, this description should not be interpreted limiting the present invention to application with any particular standard. Independent of the mechanism used to implement any of the techniques described herein, it may be advantageous for these techniques to conform to a standardized mechanism.

Exemplary embodiments of the present invention relate to techniques for remotely updating software in an electronic device. More specifically, exemplary embodiments of the present invention include techniques for the reunion of veneers that minimize the size of an update package. The software of the electronic device may include firmware, operating code, applications or other software loaded thereon, which may collectively be referred to as "binary images", or simply "images".

Exemplary embodiments of the present invention will be described below in the context of an exemplary wireless communications system utilizing mobile handsets that may update their software in a standalone configuration. Although particularly well-suited for use in conjunction with a wireless communications system and for updating handsets used in such a system, the invention is not limited to use with such system or types of mobile devices. Use of the term "mobile handset" is in no way intended to limit the application of the present invention from use with a much broader class of client devices which may be mobile or fixed, and which may be the form of a telephone handset but may also be of any number of other form factors or varieties of devices. As such, the term "client device" as used herein denotes the broadest description possible of a class of electronic devices that can be connected to a network (whether by fixed, wireless, intermittent, removably connected or other connection) and to which the software updating techniques exemplified herein may be applied, which includes, without limitation, mobile handsets, Personal Digital Assistants (PDAs), pagers, personal computers, printers and other peripheral devices. Additionally, the term "communications network" or "communications system" as used herein is used in its most expansive sense and applies to any communications system through which an update package or other information may be transferred to and from a client device, whether by static, active, dynamic communications protocols or otherwise, and includes, without limitation, anything from a single client device connected by fixed wire to a host server or computer system, or to a Local Area Network (LAN), Wide Area Network (WAN), wireless communication networks, conventional telephony, the Internet, etc. Accordingly, the disclosed updating techniques may be used in any number, type or combination of communications systems and client devices in which it is desirable to reduce the size of the update package, reduce the number of update instructions or otherwise provide more efficient updating of the binary image stored in the device. As used herein "stored," "saved," "reprogrammed," and similar terms all refer to the same process of storing a binary image in a memory device in accordance with the techniques for storing associated with the particular memory device, whether it be non-volatile flash memory, volatile Read Access Memory (RAM) or otherwise, unless specifically described otherwise.

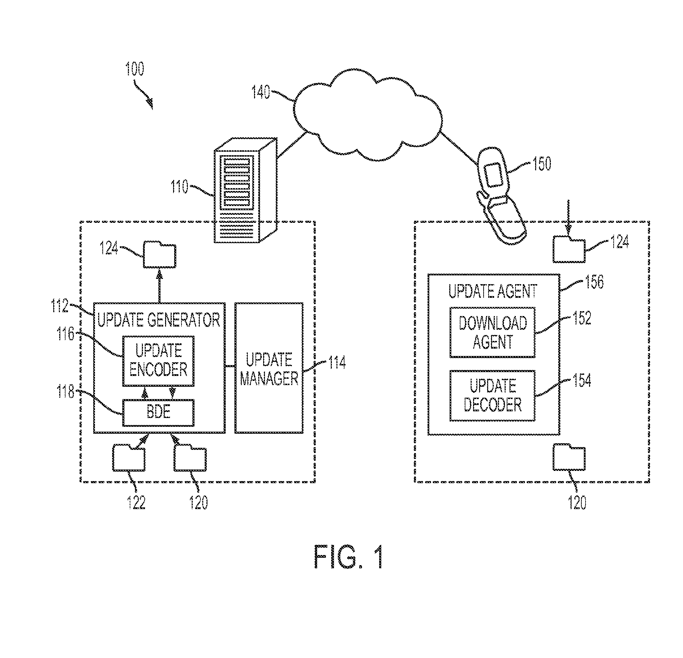

An exemplary wireless communications system in which exemplary embodiments of the present invention may be implemented is described below with reference to FIG. 1.

FIG. 1 illustrates a software update system according to an exemplary embodiment of the present invention.

Referring to FIG. 1, the software update system 100 includes an update server 110 in communication with a client device 150 through a communications network 140. The update server 110 includes, generally, an update generator 112 and an update manager 114. While not illustrated, the update server 110 may include a processor, memory and a communications interface. While depicted as a single element, the update server 110 may alternatively be comprised of a server array or set of distributed computing devices that fulfill the purposes of the update server 110. The update generator 112 creates an update package 124 through the use of a Binary Differencing Engine (BDE) 118 and an update encoder 116. The BDE 118 and update encoder 116 may be implemented as hardware modules or as software modules that include instructions that are stored in memory and executed by a processor. The update generator 112 maintains, or receives from an external source, a base data image 120 corresponding to the subject client device 150 and is also supplied with or obtains a copy of a new data image 122 for the subject client device 150. The BDE 118 receives a copy of the base data image 120 and a copy of the new data image 122 to be applied and, through a process of comparisons, generates lists or sets of instructions which are potential candidate operations usable in generating the update package 124. The update encoder 116 communicates with the BDE 118 to combine additional encoding information to select instructions from the BDE 118 and incorporates other instructions derived from additional information to ultimately create the update package 124. In a preferred exemplary embodiment, the update encoder 116 is highly integrated with the functionality of the BDE 118 so as to enhance optimization and speed of selecting and encoding instructions sets.

The update package 124 includes the update instructions, chosen as described above, as well as the code strings or data sequences to be added. Thus, the update package 124, in its most basic form contains a sequence of instructions that can be used to create the new data image 122 given the base data image 120.

After the update generator 112 generates the update package 124, the update package 124, at the appropriate time or interval, is supplied to the client device 150 via the update manager 114 through the communications network 140.

Though shown singularly, the client device 150 is representative of any number of devices that may comprise a homogeneous or heterogeneous population of client devices capable of being updated by the update system 100. Each such client device 150 includes the base data image 120 constituting the software or operating code to be updated. The base data image 120 may be stored in non-volatile memory (not illustrated) of the client device 150. The client device 150 also contains an update agent 156 that is comprised of a download agent 152 for communicating with the update server 110 and receiving an update package 124 though the communications network 140. The update agent 156 further comprises an update decoder 154 that interprets and applies the update instruction set of the update package 124 in order to convert the base data image 120 into the new data image 122. Though shown schematically as two separate elements, the download agent 152 and the update decoder 154 may be parts of the same application or software, be embedded firmware or specialized hardware such as an Application Specific Integrated Circuit (ASIC), which variations and possibilities for implementing the functionalities of the download agent 152 and the update decoder 154 will be obvious to one skilled in the art. Although not illustrated, the client device 150 may include a non-volatile memory device, a controller, a RAM device, and a communications device. Also, the client device 150 may likely include, without limitation, other elements, such as a display or visual user interface element, audio input/output elements and a keypad or other input devices or peripherals, the depiction of which with the client device is not essential to the understanding of the exemplary embodiments of the present invention by one skilled in the art.

After the download agent 152 receives the update package 124 though the communications network 140, the update decoder 154 applies the update instruction set in the update package 124 to the base data image 120 to transform it into the new data image 122.

Hereafter, two exemplary techniques for the reunion of veneers that minimize the size of an update package will be described. The first exemplary technique includes the creation of an update package instruction by a BDE that can operate on a series of contiguous veneers since both ARMLINK and FotaARM create large chunks of contiguous veneers. The second exemplary technique includes the forcible application of an offset into branch/call instructions when there is a chance that a calculated offset to a target would skip the veneer. While exemplary embodiments of the present invention are described in the context of ARM32 instructions for an ARM 11 processor, the present invention is equally applicable to other instruction types and instructions for other types of processors. In addition, while exemplary embodiments of the present invention are described in the context of veneers, the present invention is equally applicable to any code stream that has a function that is similar to a veneer. Herein, the term veneer is intended to be inclusive of code streams that have functions that are similar to the functions of veneers.

Regarding the first exemplary technique, a new update package instruction for use in the update package is proposed that is referred to as "LDR_VENEER." The LDR_VENEER instruction knows that the first address that it needs to patch contains an:
LDR PC, [PC, #-4]
ARM32 Instruction, followed by a four byte absolute address

Thus the LDR_VENEER instruction may be accompanied by one or more sets of addresses of four bytes inserted into the data image after patching in one or more LDR instruction. This reduces the size of the update package by not having to repeat the op-code for the LDR instruction for each individual veneer. An example of the LDR_VENEER instruction is provided in Table 2.

**Table 2**

| LDR VENEER | Offset in delta | Value | Offset in target | Result |
|---|---|---|---|---|
| | 0 | 0x12345678 | 0 | LDR PC, #0x12345678 |
| | 4 | 0x56789999 | 8 | LDR PC, #0x56789999 |
| | 8 | 0x99998888 | 16 | LDR PC, #0x99998888 |

Alternatively, the LDR_VENEER instruction may be accompanied by three bytes of a four byte address when the first byte of the four byte address is highly predictable and common to each address. This further reduces the size of the update package by reducing the address information of the LDR_VENEER instruction. The LDR_VENEER instruction may be utilized by the BDE to generate one or more veneers that are used when generating the update package.

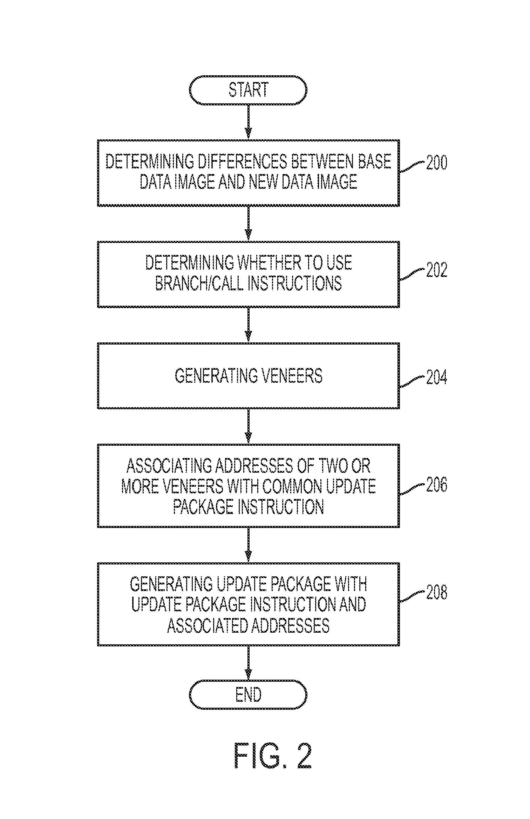

An example of a BDE generating an update package using the LDR_VENEER instruction is described below with reference to FIG. 2.

FIG. 2 is a flowchart for generating an update package using an LDR_VENEER instruction according to an exemplary embodiment of the present invention.

Regarding FIG. 2, a BDE determines differences between a base data image and a new data image in step 200. In step 202, the BDE determines whether to use at least one of a branch and call instructions. In step 204, the BDE generates a veneer when any of the at least one of a branch and call instructions exceeds a corresponding address range. In step 206, the BDE associates addresses of two or more veneers with a common update package instruction. The addresses may be all bytes of a four byte address or three bytes of a four byte address. In step 208, the BDE generates the update package using the update package instruction and associated addresses. Thereafter, the BDE terminates the procedure.

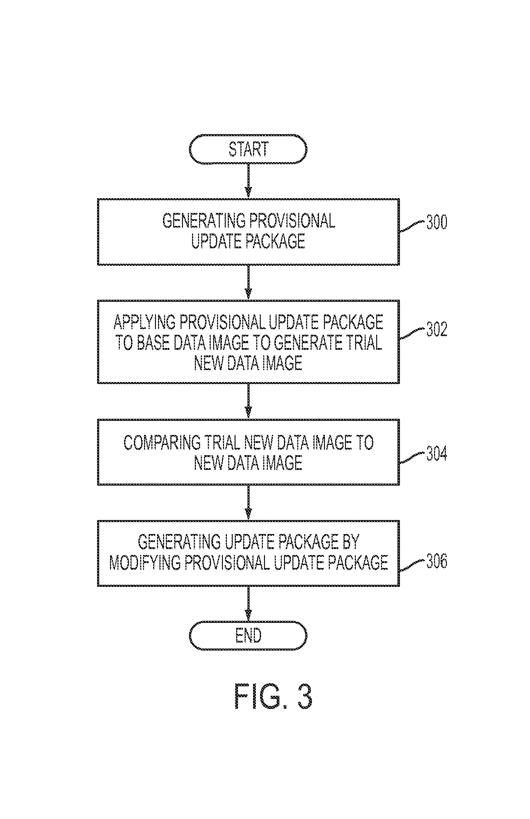

Regarding the second technique, namely the forcible application of an offset into branch/call instructions when there is a chance that a calculated offset to a target would skip the veneer, a second pass in creating the update package is needed. The second exemplary technique will be described below with reference to FIG. 3.

FIG. 3 is a flowchart for generating an update package using a second pass according to an exemplary embodiment of the present invention.

Regarding FIG. 3, the BDE generates a provisional update package in step 300. In step 302, the BDE applies the provisional update package to the base date image. In step 304, the BDE compares the resulting trial new data image to the actual new data image. In step 306, the BDE generates the final update package by modifying the provisional update package based on the results of the comparison in step 304 such that the final update package, when applied to the base data image, generates the new data image. Herein, the provisional update package may be modified to unsure that each and every branch instruction chooses the same target address in the actual base image as ARMLINK chooses. Optionally, the final update package may be tested by the BDE to verify that the new data image is properly generated when applied to the base data image. Thereafter, the BDE terminates the procedure.

Accordingly, by implementing at least one of the two techniques described above, a comparatively smaller update package may be produced that describes the differences between a base data image and a new data image. This update package is then applied to the base data image with the ability to re-establish the new target locations correctly when simple reference changes are identified that are the targets of branch and call instructions. The application of the update package to the base data image is outside the scope of this disclosure and therefore a more detailed description thereof is omitted for conciseness.

A Python program was written to examine the statistical effect of the implementation of the two techniques described above. In the experiment, the Python program read an arbitrary number of bytes from a Samsung^{™} SGH-ZX10 Universal Mobile Telecommunications System (UMTS) mobile terminal thumb code data image, and treated each set of four bytes as an address. Two files were created by the Python program. The first file was prepared from the buffer of bytes to create the same binary image effect as described herein according to exemplary embodiments of the present invention. A second file was prepared by splicing the hex pattern "OxE51FF004" in front of each set of four bytes that were extracted. This image matches what a veneer created by ARMLINK. These two files were zipped using the Winzip^{™} program for various lengths of data. The results are shown in Table 3:

**Table 3**

| Number of bytes | First Zip file size | Second Zip file size | Percent improvement |
|---|---|---|---|
| 8,192 | 5547 | 6876 | 19.3 |
| 50,000 | 28658 | 35234 | 18.7 |
| 64,000 | 38128 | 47391 | 19.5 |
| 200,000 | 134,897 | 168,608 | 20 |
| 400,000 | 276,083 | 346,781 | 20.4 |

The Samsung^{™} SGH-ZX10 UMTS mobile terminal data image contains 50,000 veneers, requiring 400,000 bytes of uncompressed image. Thus a delta size reduction of 70,698 bytes could be expected by implementation the techniques described in this disclosure.

Certain aspects of the present invention may also be embodied as control logic stored on a computer useable medium that causes a computer to process the control logic so as to operate in a manner corresponding to the control logic. The control logic comprises one or more computer readable program code means. A computer useable medium is any data storage device that can store data, which may be thereafter read by a computer system. Examples of the computer useable medium include Read-Only Memory (ROM), Random-Access Memory (RAM), CD-ROMs, magnetic tapes, floppy disks, and optical data storage devices. The computer useable medium can also be distributed over network coupled computer systems so that the computer readable code is stored and executed in a distributed fashion. Also, functional programs, code, and code segments for accomplishing the present invention may be easily construed by programmers skilled in the art to which the present invention pertains.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for generating an update package based on a comparison between a base data image and a new data image, wherein the update package includes a set of instructions used for, in a remote client device, creating the new data image from the base data image, the method comprising:
determining, by a Binary Differencing Engine (BDE), differences between the base data image and the new data image;
determining, by the BDE, whether to use at least one of a branch and call instructions;
generating, by the BDE, a veneer when any of the at least one of a branch and call instructions exceeds a corresponding address range, each veneer including an address;
associating, by the BDE, addresses of two or more veneers with a common update package instruction; and
generating, by the BDE, the update package using one or more update package instructions and associated addresses.

2. The method of claim 1, wherein the addresses of the two or more veneers each comprise four byte addresses.

3. The method of claim 2, wherein the addresses of the two or more veneers each comprise three out of four bytes of four byte addresses.

4. A method for generating an update package based on a comparison between a base data image and a new data image, wherein the update package includes a set of instructions used for, in a remote client device, creating the new data image from the base data image, the method comprising:
generating, by a Binary Differencing Engine (BDE), a provisional update package;
applying, by the BDE, the provisional update package to the base data image to generate a trial new data image;
comparing, by the BDE, the trial new data image to the new data image; and
generating, by the BDE, the update package by modifying the provisional update package based on a result of the comparison between the trial new data image to the new data image.

5. The method of claim 4, further comprising, for each of one of a branch and call instruction, determining if a calculated offset to a target address would skip a veneer,
wherein if it is determined that the calculated offset to the target address would skip the veneer, the modifying of the provisional update package comprises applying an offset into one of a branch and call instruction.

6. A computer program product comprising a computer usable medium having control logic stored therein for causing a computer to generating an update package based on a comparison between a base data image and a new data image, wherein the update package includes a set of instructions used for, in a remote client device, creating the new data image from the base data image, the control logic comprising:
a first computer readable program code means for causing the computer to determine differences between the base data image and the new data image;
a second computer readable program code means for causing the computer to determine whether to use at least one of a branch and call instructions;
a third computer readable program code means for causing the computer to generate a veneer when any of the at least one of a branch and call instructions exceeds a corresponding address range, each veneer including an address;
a fourth computer readable program code means for causing the computer to associate addresses of two or more veneers with a common update package instruction; and
a fifth computer readable program code means for causing the computer to generate the update package using one or more update package instructions and associated addresses.

7. The computer program product of claim 6, wherein the addresses of the two or more veneers each comprise four byte addresses.

8. The computer program product of claim 7, wherein the addresses of the two or more veneers each comprise three out of four bytes of four byte addresses.

9. A computer program product comprising a computer usable medium having control logic stored therein for causing a computer to generating an update package based on a comparison between a base data image and a new data image, wherein the update package includes a set of instructions used for, in a remote client device, creating the new data image from the base data image, the control logic comprising:
a first computer readable program code means for causing the computer to generate a provisional update package;
a second computer readable program code means for causing the computer to apply the provisional update package to the base data image to generate a trial new data image;
a third computer readable program code means for causing the computer to compare the trial new data image to the new data image; and
a fourth computer readable program code means for causing the computer to generate the update package by modifying the provisional update package based on a result of the comparison between the trial new data image to the new data image.

10. The computer program product of claim 9, the control logic further comprising a fifth computer readable program code means for causing the computer to, for each of one of a branch and call instruction, determine if a calculated offset to a target address would skip a veneer,
wherein if it is determined that the calculated offset to the target address would skip the veneer, the fourth computer readable program code means causes the computer to apply an offset into one of a branch and call instruction.
